# EUROPÄISCHE PATENTSCHRIFT

(11) **EP 0 908 100 B1**
(45) Veröffentlichungstag und Bekanntmachung des Hinweises auf die Patenterteilung: **06.10.2004**
(21) Anmeldenummer: 98113021.4
(22) Anmeldetag: 13.07.1998
(51) Int. Cl.: A21D 13/00, A21D 13/08, A23P 1/08

(54) **Dauerbackware**
Long shelf-life bakery product
Patisserie à longue durée de conservation

(30) Priorität: 22.09.1997 DE 19741718
(43) Veröffentlichungstag der Anmeldung: 14.04.1999
(73) Patentinhaber: Bahlsen GmbH & Co. KG, 30163 Hannover (DE)
(72) Erfinder: Böcker, Jochen, 31655 Stadthagen (DE); Mahler, Reinhard, 31535 Neustadt (DE); Siefert, Uwe, 30455 Hannover (DE); Rother, Rita, 28398 Bremen (DE); Bretschneider, Uwe Dr., 30657 Hannover (DE); Sitzmann, Werner Dr., 21075 Hamburg (DE)
(74) Vertreter: Weber, Joachim, Dr.

(56) Entgegenhaltungen:
- EP-A- 0 450 767
- EP-A- 0 648 431
- EP-A- 0 682 872
- WO-A-96/28035
- FR-A- 2 744 593
- US-A- 3 779 772
- US-A- 4 068 007
- US-A- 4 430 351
- US-A- 4 919 946
- EISENBRAND G.: "RÖMPP LEXIKON LEBENSMITTELCHEMIE", 1995, GEORG THIEME VERLAG, SUTTGART
- TÄUFER A; TUNGER L; ZOBEL M: "LEBENSMITTELLEXIKON", 1979, VEB FACHBUCHVERLG LEIPZIG, LEIPZIG
- Leitsätze für Feine Backwaren; Besondere Beurteilungsmerkmale für Dauerbackwaren

## Beschreibung

Die Erfindung bezieht sich auf eine Dauerbackware, welche Kekse, oder Waffeln umfaßt, zwischen welchen sandwichartig eine Füllung angeordnet ist.

Der Stand der Technik zeigt unterschiedlichste Ausgestaltungsformen von sandwichartigen Dauerbackwaren. Üblicherweise wird zwischen zwei vorgebackenen Gebäckteilen eine flüssige, cremige oder pastöse Masse eingebracht, gegen welche die beiden Gebäckteile angelegt werden. Nach Erstarren, Aushärten oder einem ähnlichen Vorgang der zwischengelegten Masse sind die beiden Gebäckteile fest mit dieser verbunden, so daß die Dauerbackware einen sandwichartigen Aufbau aufweist.

Die aus dem Stand der Technik bekannten Ausgestaltungsformen weisen den Nachteil auf, daß die Form oder Ausgestaltung der Füllung optisch meist nicht sehr ansprechend ist und deshalb den Käufer oder Konsumenten nicht anspricht. Die ungünstige Optik ergibt sich daraus, daß zum einen die Dosierung der cremigen oder flüssigen Füllung nicht immer ganz exakt ist, weiterhin kann das Fließverhalten unterschiedlich sein, so daß die Füllung zur einen Seite des Sandwichgebäcks bis an dessen Rand vordringen kann oder sogar über die beiden Gebäckteile vorstehen kann, während andere Bereiche, insbesondere an den Ecken, nicht ausreichend ausgefüllt sind. Ein zusätzlicher Nachteil kann darin bestehen, daß die beiden Gebäckteile nicht exakt fluchtend zueinander angeordnet werden können, wodurch sich ein optisch ungenügendes und unerwünschtes Aussehen ergibt.

Bei Sandwichgebäcken, welche in einer Form hergestellt werden, ist durch den Kontakt mit der Form das nachfolgende Ausformen der Randbereiche der Füllung ebenfalls optisch ungenügend, weiterhin besteht die Gefahr, daß die beiden Gebäckteile durch die Füllung benetzt oder überzogen werden, auch dies ist unerwünscht.

Der Stand der Technik zeigt weiterhin die Möglichkeit, eine sandwichartige Dauerbackware dadurch zu erzeugen, daß in eine flüssige oder vorkristallisierte, in einer Form befindliche Schokoladenmasse ein Keks eingelegt wird, welcher, zumindest zum Teil, in die Schokolade eindringt. Nach dem Ausformen der Schokolade muß dann ein weiterer Keks oder ein weiteres Gebäckteil auf der rückseitigen Fläche der Schokoladentafel angebracht werden. Ein derartiges Sandwichgebäck ist nicht symmetrisch aufgebaut, weiterhin besteht der Nachteil, daß die Schokolade über den Rand der Gebäckteile vorsteht und zumindest das eingelegte Gebäckteil nicht exakt hinsichtlich seiner Lage positionierbar ist.

Die FR 2 744 593 A1 beschreibt ein kuchenartiges Gebäckteil mit einem Oberteil und einem Unterteil, zwischen welche eine Zwischenlage eingelegt ist, die beispielsweise aus Schokolade bestehen kann. Diese Zwischenlage ist begrenzt durch eine obere und eine untere Lage, die aus Konfitüre oder Marmelade besteht. Es wird somit ein mehrschichtiges törtchenartiges Element beschrieben, dessen Oberteil und Unterteil aus Blätterteig oder Kuchenteig besteht. Es handelt sich somit nicht um eine industriell herstellbare Dauerbackware mit einer festen plattenförmigen Füllung.

Aus der EP 682 872 A 1 ist eine Einlage für ein Nahrungsmittelprodukt vorbekannt, welche aus einer weichen Paste besteht, die eine hohe Viskosität und Klebrigkeit aufweist. Da derartige Pasten, die nachfolgend zu einem Lebensmittelprodukt weiterverarbeitet werden sollen, kontinuierlich hergestellt werden sollen, ergibt sich durch die hohe Viskosität und die Klebrigkeit das Problem der weiteren Verarbeitung bzw. des weiteren Handlings. Aus diesem Grunde werden die obere und die untere Fläche mit einer sehr dünnen Waffelschicht belegt, die lediglich zur Versiegelung der klebrigen Oberfläche dient. Das somit erhaltene Laminat-Produkt kann nachfolgend auf einfache Weise geschnitten oder gestampft und weiterverarbeitet werden. Die dünne Waffelbelegung dient somit lediglich dazu, die Klebrigkeit der Oberfläche der Paste und die sich daraus ergebenden Nachteile zu überwinden.

Aus der WO 96/28035 A1 ist ein Lebensmittel-Produkt bekannt, bei welchem zwei Waffelhälften mit einer cremigen Füllung gefüllt werden. Jede der Waffelhälften ist dabei schalenförmig ausgebildet und wird bis zu ihrem Rand mit der Füllung aufgefüllt. Nachfolgend werden die beiden gefüllten Waffelhälften miteinander verbunden. Sie dienen somit als Schale für das weiche, cremige Füll-Produkt, welches zur Außenseite hin nicht sichtbar ist. In einem nachfolgenden Arbeitsgang werden die Waffelhälften nochmals beschichtet, beispielsweise mit Schokolade oder Ähnlichem.

Die US 3 779 772 A beschreibt ein Verfahren zur Herstellung von Nahrungsmittelprodukten, bei welchem eine weiche, cremige Füllung auf eine Gebäckscheibe aufgelegt und nachfolgend eine zweite Gebäckscheibe aufgepresst wird. Hierdurch wird die Füllung entsprechend flachgedrückt. Als nachteilig erweist sich hierbei, dass die Dimensionierung der Füllung zufällig erfolgt, abhängig von der Menge der Füllung und der jeweiligen Presskraft. Es ergeben sich optisch sehr ungenügende Randbereiche, bei welchen die Füllung entweder austreten oder weit vom Rand des Gebäckteils zurückweichen kann.

Ein weiteres Nahrungsmittelprodukt zeigt die US 4 919 946 A. Dabei wird eine Art Sandwich beschrieben, welches einen zwischengelegten, essbaren Behälter mit einer lockeren Füllung umfasst. Ein schalenartige, den Behälter bildende Nahrungsmittelzubereitung wird somit zwischen zwei Brötchenhälften eingepackt.

Der Erfindung liegt die Aufgabe zugrunde, eine sandwichartige Dauerbackware zu schaffen, welche bei einfacher und betriebssicherer Herstellbarkeit höchsten optischen Anforderungen genügt. Erfindungsgemäß wird die Aufgabe durch die Merkmale des Hauptanspruchs gelöst, die Unteransprüche zeigen weitere vorteilhafte Ausgestaltungen der Erfindung.

Bei der erfindungsgemäßen Dauerbackware ist somit vorgesehen, daß zwischen einem oberen und einem unteren, im wesentlichen jeweils plattenförmigen Gebäckteil eine plattenförmige Füllung, welche als vorgefertigtes, eine formstabile Zwischenlage bildendes Element ausgebildet ist, angebracht ist, welche mit den beiden Gebäckteilen fest verbunden ist, wie in Anspruch 1 definiert.

Die erfindungsgemäße Dauerbackware zeichnet sich somit durch eine Reihe erheblicher Vorteile aus. Durch die plattenförmige Ausgestaltung der Füllung ist es möglich, diese exakt zu dimensionieren und insbesondere Seitenflächen auszubilden, welche der Dauerbackware ein hervorragendes optisches Aussehen verleihen. Die Befestigung oder Verbindung der plattenförmigen, vorgefertigten Füllung mit den beiden Gebäckteilen kann auf unterschiedlichste Weise, abhängig von den jeweiligen Materialien der Füllung und der Gebäckteile erfolgen.

Im Gegensatz zu der oben beschriebenen Literaturstelle handelt es sich bei der vorliegenden Erfindung um eine sandwich-artige Dauerbackware, welche aus drei festen, einzeln hergestellten und einzeln handhabbaren Elementen mittels eines Fügeverfahrens zusammengesetzt wird. Die beiden Gebäckteile werden separat hergestellt, ebenso wie die plattenförmige, feste Füllung. Es handelt sich somit nicht um creme-artige oder pastöse Zwischenlagen zwischen zwei Gebäckteilen, sondern um eine eigenständige formstabile Zwischenlage. Diese Zwischenlage bzw. Füllung wird mittels Zusatzstoffen mit den beiden Gebäckteilen verbunden. Somit unterscheiden sich sowohl die Grundkonzeption als auch die Verarbeitungsschritte von den Technologien, die in den beiden Entgegenhaltungen beschrieben sind.

In einer günstigen Weiterbildung der Erfindung ist vorgesehen, daß die plattenförmige Füllung mittels eines Fügeverfahrens mit den Gebäckteilen verbunden ist. Für das Fügeverfahren können erfindungsgemäß Zusatzstoffe eingebracht werden, welche beispielsweise aus dem gleichen Material bestehen können wie die Füllung. So kann etwa bei einer Füllung, die in Form einer Schokoladetafel oder einer Tafel aus einer anderen fetthaltigen Masse besteht, das Verbinden oder Fügen mit den Gebäckteilen durch Aufbringen von zusätzlichen Volumina aus Schokolade oder aus der fetthaltigen Masse erfolgen.

Erfindungsgemäß kann die plattenförmige Füllung auch aus Karamel bestehen.

Besonders günstig ist es dabei, wenn die Zusatzstoffe in zumindest eine Ausnehmung der Oberfläche der Oberseite und der Unterseite,der Füllung eingebracht sind. Durch die Verwendung einer Ausnehmung wird sichergestellt, daß die beiden plattenförmigen Gebäckteile plan und parallel zu der plattenförmigen Füllung liegen. Hierdurch ist eine exakte Ausrichtung der Position möglich, so daß sowohl die gewünschte Geometrie der fertigen Dauerbackware als auch eine hervorragende optische Erscheinung gewährleistet sind.

Die Ausnehmungen können erfindungsgemäß durch Randbereiche der plattenförmigen Füllung gebildet sein. Dies bedeutet, daß die plattenförmige Füllung mit einem Randwulst oder ähnlichem ausgebildet ist.

Weiterhin ist es weiterhin günstig, wenn die plattenförmige Füllung als vorgefertigtes Element hergestellt wird. Die Dauerbackware kann somit aus drei Komponenten zusammengesetzt werden, die für sich jeweils unabhängig hergestellt sind. Insbesondere hinsichtlich der plattenförmigen Füllung können somit Produktionsschritte vorgesehen sein, die speziell auf die plattenförmige Füllung abgestimmt sind, nicht jedoch die Herstellung der Gebäckteile oder das nachfolgende Zusammenfügen der beiden Gebäckteile mit der Füllung berücksichtigen müssen. Dies bedeutet, daß die plattenförmige Füllung, welche aus Schokolade oder einer fetthaltigen Masse besteht, in geeignete Formen gegossen werden kann. Das Herstellungsverfahren der Füllung kann unabhängig von den Gebäckteilen überwacht und gesteuert werden. Dabei erweist es sich insbesondere als vorteilhaft, daß die Seitenflächen der Füllung, welche bei der Dauerbackware sichtbar sind, in gezielter und beeinflußbarer Weise ausgebildet sein können. Es ist dabei besonders vorteilhaft, wenn die Seitenflächen eben sind, da hierdurch der optische Eindruck der Dauerbackware erheblich verbessert wird. Weiterhin ist es möglich, die Füllung in exakt vorbestimmter Geometrie zu erzeugen, beispielsweise in Form einer rechteckigen Schokoladetafel, deren Form zu der rechteckigen Form der Gebäckteile exakt paßt. Gleiches gilt für runde, ovale oder sonstige Formen.

Erfindungsgemäß kann die Dauerbackware auch drei plattenförmige Gebäckteile mit zwei zwischengelegten Füllungen oder, in analoger Weiterbildung, mehrere Gebäckteile mit mehreren Füllungen umfassen. Weiterhin ist es erfindungsgemäß auch möglich, mehrere plattenförmige Füllungen direkt aufeinanderzulegen und nach oben und nach unten durch ein Gebäckteil zu begrenzen.

Alternativ zu den beschriebenen Fügeverfahren, bei welchem die Zusatzstoffe aus den gleichen Materialien bestehen wie die plattenförmige Füllungen, ist es erfindungsgemäß auch möglich, andere Zusatzstoffe oder Fügestoffe zu verwenden, um die plattenförmige Füllung mit dem Gebäckteil zu verkleben.

Als weitere erfindungsgemäß günstige Variante ist auch ein Fügen der plattenförmigen Füllung mit den Gebäckteilen ohne Zusatzstoffe möglich, dabei können Bereiche der plattenförmigen Füllung die Funktion der Fügestoffe übernehmen. Derartige Bereiche können beispielsweise durch Rippen, Ränder, Noppen oder ähnliches ausgebildet werden, welche bei der Herstellung der plattenförmigen Füllung erzeugt wurden.

Ein weiterer, wesentlicher Vorteil der erfindungsgemäßen Dauerbackware besteht darin, daß die Seitenflächen der plattenförmigen Füllung exakt zu den Seitenflächen oder Seitenbereichen der Gebäckteile ausgebildet und positioniert werden können. So ist es möglich, die Seitenflächen der plattenförmigen Füllung exakt fluchtend zu den Seitenbereichen der Gebäckteile anzuordnen, es ist jedoch auch möglich, die Seitenflächen der plattenförmigen Füllung zurückversetzt auszubilden, d.h. die plattenförmige Füllung kleiner auszugestalten als die Gebäckteile. Alternativ hierzu ist es auch möglich, nur einzelne Seitenflächen oder Bereiche der Seitenflächen versetzt oder vorspringend oder fluchtend anzuordnen oder auszurichten.

Durch die Möglichkeit, die plattenförmige Füllung vorzufertigen und mit beliebigen Gebäckteilen zu kombinieren, kann das Gewichtsverhältnis der erfindungsgemäßen Dauerbackware in weitem Maße variiert werden. So ist es möglich, ein Gewichtsverhältnis von Füllung zu Gebäckteilen von 50 zu 50 zu realisieren, die Füllung kann jedoch wesentlich dünner oder wesentlich dicker ausgestaltet werden.

Die Gebäckteile sind in Form von Keksen, oder Waffeln ausgebildet.

Die plattenförmige Füllung selbst kann hinsichtlich ihrer Seitenflächen dem für deren Materialien günstigen Herstellungsverfahren angepaßt werden. Bei einer Herstellung der Füllung aus Schokolade kann es günstig sein, die Seitenflächen geneigt anzuordnen, beispielsweise mit einer Neigung von 4 Grad zur Senkrechten auf die Horizontalfläche der plattenförmigen Füllung.

Im folgenden wird die Erfindung anhand eines Ausführungsbeispiels in Verbindung mit der Zeichnung beschrieben. Dabei zeigt:
- Fig. 1: eine vereinfachte perspektivische Darstellung eines Ausführungsbeispiels der erfindungsgemäßen Dauerbackware;
- Fig. 2: eine vereinfachte Schnittansicht durch die in Fig. 1 gezeigte Dauerbackware;
- Fig. 3: eine Darstellung der in den Fig. 1 und 2 gezeigten plattenförmigen Füllung;
- Fig. 4: eine Darstellung eines ersten Herstellungsschrittes durch Fügen eines oberen Gebäckteils mit der plattenförmigen Füllung; und
- Fig. 5: eine Darstellung eines möglichen zweiten Herstellungsschrittes durch Aufbringen von Zusatzstoffen auf ein unteres Gebäckteil vor dem Auflegen der in Fig. 4 gezeigten Anordnung.

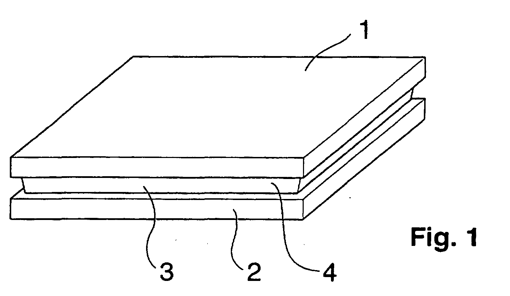

Die Fig. 1 zeigt in vereinfachter, schematischer Darstellung ein Ausführungsbeispiel einer erfindungsgemäßen sandwichartigen Dauerbackware. Dieses umfaßt ein oberes Gebäckteil 1 sowie ein unteres Gebäckteil 2. Diese können in Form von plattenförmigen Keksen ausgebildet sein. Die Fig. 1 zeigt eine sehr schematische Darstellung, in welcher die Gebäckteile quaderförmig ausgebildet sind. Es versteht sich, daß die Seitenflächen der Gebäckteile 1 und 2 gerippt, gewellt oder in anderer Weise strukturiert sein können. Gleiches gilt für die jeweiligen oberen und unteren Flächen der Gebäckteile 1 und 2.

Zwischen die beiden Gebäckteile 1 und 2 ist eine plattenförmige Füllung 3 eingelegt, welche als vorgefertigtes, eine formstabile Zwischenlage bildendes Element ausgebildet ist und plane Seitenflächen 4 aufweist.

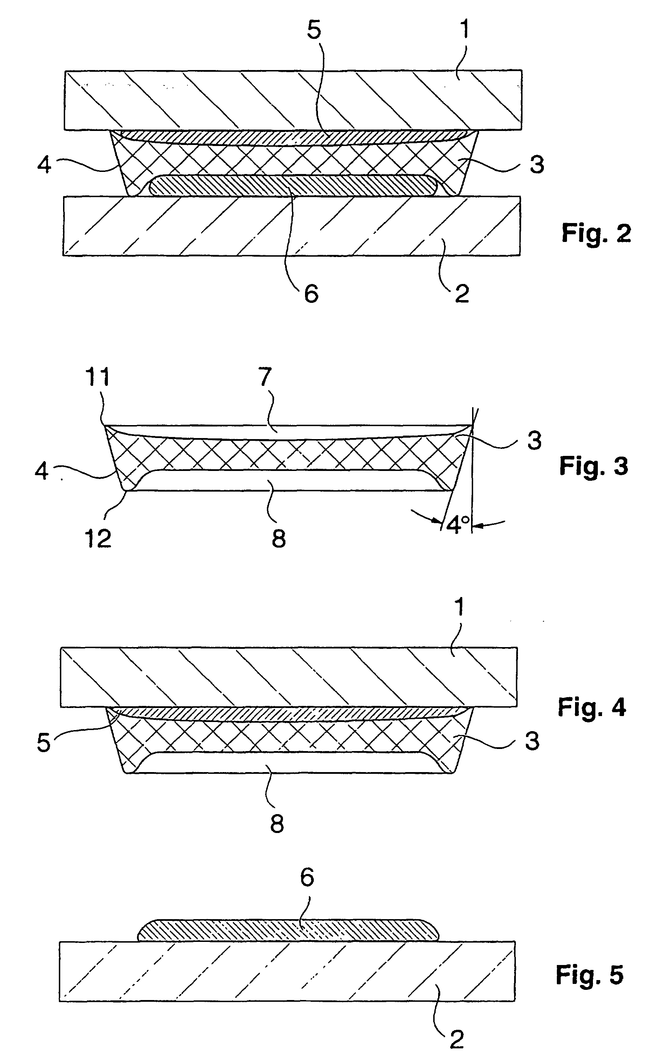

Wie die Schnittansichten der Fig. 2 und 3 zeigen, weist die plattenförmige Füllung 3 jeweils ebene Seitenflächen 4 auf, welche in einem Winkel, beispielsweise 4 Grad, zur Senkrechten auf die Plattenfläche geneigt sind. Durch diese Neigung der Seitenflächen ist zum einen sichergestellt, daß die plattenförmige Füllung gut ausgeformt werden kann, zum anderen ergibt sich ein sehr ansprechendes optisches Erscheinungsbild.

Die Füllung 3 ist weiterhin mit einer oberen Ausnehmung 7 und einer unteren Ausnehmung 8 versehen. Die obere Ausnehmung 7 kann durch die Herstellung der plattenförmigen Füllung 3 erzeugt werden, nämlich durch einen Schüttelrand 11, welcher sich bei der Herstellung der Schokoladentafel ausbildet. Die untere Ausnehmung 8 wird durch einen Wulst 12 gebildet, der durch die Gußform der Schokoladentafel erzeugt wird.

Aus den Fig. 2 und 3 ergibt sich somit, daß die Ausnehmungen 7 und 8 ein ausreichendes Volumen bereitstellen, um jeweils einen oberen Zusätzstoff 5 und einen unteren Zusatzstoff 6 einzubringen, mit deren Hilfe ein Fügen oder Verbinden der plattenförmigen Füllung 3 mit dem oberen Gebäckteil 1 und dem unteren Gebäckteil 2 möglich wird.

In Fig. 4 ist ein erster Herstellungsschritt der Dauerbackware gezeigt. Nach dem Herstellen der plattenförmigen Füllung 3 wird in deren Ausnehmung 7 der obere Zusatzstoff 5 eingebracht. Das Einbringen des Zusatzstoffs kann flächig, punktförmig oder streifenförmig erfolgen. Der Zusatzstoff 5 kann, wenn die Füllung 3 aus Schokolade hergestellt ist, aus dem gleichen Schokoladenwerkstoff bestehen. Nachfolgend wird das obere Gebäckteil 1 exakt positioniert aufgesetzt und angedrückt, so daß es auf den Schüttelrand 11 aufliegt. Hierdurch ist eine plane, exakte Zuordnung zwischen dem oberen Gebäckteil 1 und der Füllung 3 sichergestellt.

Nachdem der obere Zusatzstoff 5 erstarrt oder ausgehärtet ist, ist es entweder möglich, die in Fig. 4 gezeigte Anordnung um 180 Grad zu wenden. In die gemäß Fig. 4 untere Ausnehmung 8 kann dann der Zusatzstoff 6 eingebracht werden. Nachfolgend ist es möglich, analog zu dem in Fig. 4 gezeigten Herstellungsverfahren, das andere Gebäckteil 2 exakt positioniert aufzulegen, so daß dieses auf dem Randwulst 12 aufliegt und ebenfalls exakt positioniert ist.

Alternativ hierzu kann auch so vorgegangen werden, daß, wie in Fig. 5 gezeigt, auf das untere Gebäckteil 2 der Zusatzstoff 6 aufgebracht wird, woraufhin die in Fig. 4 gezeigte Anordnung exakt positioniert aufgesetzt wird.

Wie sich aus der obigen Beschreibung ergibt, ist es erfindungsgemäß möglich, die vorgefertigte, plattenförmige Füllung exakt auszubilden und zwischen den beiden Gebäckteilen zu positionieren, wobei die Seitenflächen 4 der Füllung 3 exakt plan und glänzend sein können, so daß die Dauerbackware höchste optische Anforderungen erfüllt.

## Patentansprüche

1. Dauerbackware mit einem oberen (1) und einem unteren (2), jeweils plattenförmigen Gebäckteil und mindestens einer zwischen diesen befestigten plattenförmigen Füllung (3), welche als separates, vorgefertigtes, eine feste, formstabile Zwischenlage bildendes Element ausgebildet ist und, sichtbar Seitenflächen (4) aufweist, wobei die plattenförmige Füllung (3) mittels eines Fügeverfahrens mit den Gebäckteilen (1, 2) feste verbunden ist, wobei plattenförmige Füllung (3) aus Schokolade und/oder einer fetthaltigen Masse und/oder aus Karamel gefertigt ist und wobei die Gebäckteile als Kehs oder Waffel ausgeführt sind.

2. Dauerbackware nach Ansprüch 1, **dadurch gekennzeichnet, daß** die plattenförmige Füllung (3) ebene Seitenflächen (4) aufweist.

3. Dauerbackware nach Anspruch 1 oder 2, **dadurch gekennzeichnet, daß** die Seitenflächen (4) zur Senkrechten auf die Horizontalfläche geneigt sind.

4. Dauerbackware nach Anspruch 3, **dadurch gekennzeichnet, daß** die Neigung 4 Grad beträgt.

5. Dauerbackware nach einem der Ansprüche 1 bis 4, **dadurch gekennzeichnet, daß** für das Fügeverfahren Zusatzstoffe (5, 6) eingebracht sind.

6. Dauerbackware nach Anspruch 5, **dadurch gekennzeichnet, daß** die Zusatzstoffe (5, 6) aus dem gleichen Material bestehen wie die Füllung (3).

7. Dauerbackware nach Anspruch 5 oder 6, **dadurch gekennzeichnet, daß** die Zusatzstoffe in zumindest eine Ausnehmung (7, 8) der Oberfläche der Oberseite und der Unterseite der Füllung (3) angeordnet sind.

8. Dauerbackware nach Anspruch 7, **dadurch gekennzeichnet, daß** die Ausnehmung (7, 8) durch einen Randbereich (11, 12) der Füllung (3) gebildet wird.

9. Dauerbackware nach einem der Ansprüche 1 bis 4, **dadurch gekennzeichnet, daß** für das Fügeverfahren keine Zusatzstoffe verwendet werden.

10. Dauerbackware nach Anspruch 9, **dadurch gekennzeichnet, daß** für das Fügeverfahren Bereiche der plattenförmigen Füllung (3) selbst verwendet sind.

11. Dauerbackware nach Anspruch 10, **dadurch gekennzeichnet, daß** die Bereiche durch einen Rand und/oder erhabene Bereiche der plattenförmigen Füllung (3) gebildet werden.

12. Dauerbackware nach einem der Ansprüche 1 bis 11, **dadurch gekennzeichnet, daß** die Seitenflächen (4) der plattenförmigen Füllung (3) im wesentlichen mit den Seitenflächen (9, 10) und/oder Seitenbereichen der Gebäckteile (1, 2) fluchten.

13. Dauerbackware nach einem der Ansprüche 1 bis 11, **dadurch gekennzeichnet, daß** die Seitenfläche (4) der plattenförmigen Füllung (3) im wesentlichen zu den Seitenflächen (9, 10) und/oder Seitenbereichen der Gebäckteile (1, 2) zurückversetzt sind.

14. Dauerbackware nach einem der Ansprüche 1 bis 13, **dadurch gekennzeichnet, daß** das Gewichtsverhältnis von Füllung (3) zu Gebäckteilen (1, 2) im wesentlichen gleich ist.

## Claims

1. Long-life baked product having an upper (1) and a lower (2) in each case lamellar baked part and at least one lamellar filling (3) attached between the latter, which filling (3) is formed as a separate, prefabricated element forming a solid, dimensionally stable intermediate layer and has visible side surfaces (4), wherein the lamellar filling (3) is firmly joined to the baked parts (1, 2) by means of a joining process, wherein the lamellar filling (3) is made from chocolate and/or a fat-containing composition and/or from caramel and wherein the baked parts are made as biscuits or waffles.

2. Long-life baked product according to claim 1, **characterised in that** the lamellar filling (3) has flat side surfaces (4).

3. Long-life baked product according to claim 1 or 2, **characterised in that** the side surfaces (4) are inclined to the vertical onto the horizontal surface.

4. Long-life baked product according to claim 3, **characterised in that** the incline is 4 degrees.

5. Long-life baked product according to one of claims 1 to 4, **characterised in that** additives (5, 6) are introduced for the joining process.

6. Long-life baked product according to claim 5, **characterised in that** the additives (5, 6) consist of the same material as the filling (3).

7. Long-life baked product according to claim 5 or 6, **characterised in that** the additives are arranged in at least one recess (7, 8) of the surface of the upper side and of the lower side of the filling (3).

8. Long-life baked product according to claim 7, **characterised in that** the recess (7, 8) is formed by an edge region (11, 12) of the filling (3).

9. Long-life baked product according to one of claims 1 to 4, **characterised in that** no additives are used for the joining process.

10. Long-life baked product according to claim 9, **characterised in that** regions of the lamellar filling (3) itself are used for the joining process.

11. Long-life baked product according to claim 10, **characterised in that** the regions are formed by one edge and/or raised regions of the lamellar filling (3).

12. Long-life baked product according to one of claims 1 to 11, **characterised in that** the side surfaces (4) of the lamellar filling (3) are essentially aligned with the side surfaces (9, 10) and/or side regions of the baked parts (1, 2).

13. Long-life baked product according to one of claims 1 to 11, **characterised in that** the side surfaces (4) of the lamellar filling (3) are essentially set back to the side surfaces (9, 10) and/or side regions of the baked parts (1, 2).

14. Long-life baked product according to one of claims 1 to 13, **characterised in that** the weight ratio of filling (3) to baked parts (1, 2) is essentially the same.

## Revendications

1. Pâtisserie à longue durée de conservation avec une partie de pâtisserie supérieure (1) et inférieure (2) en forme de plaque et au moins une garniture (3) en forme de plaque fixée entre celles-ci, qui est conçue comme un élément séparé et préfabriqué constituant une couche intermédiaire stable et qui comprend des faces latérales (4) visibles, la garniture en forme de plaque (3) étant reliée fermement avec les parties de la pâtisserie (1, 2) à l'aide d'un procédé d'assemblage, la garniture en forme de plaque (3) étant constituée de chocolat et/ou d'une pâte contenant des matières grasses et/ou de caramel, et les parties de la pâtisserie étant conçues comme un biscuit ou une gaufre.

2. Pâtisserie à longue durée de conservation selon la revendication 1, **caractérisée en ce que** la garniture en forme de plaque (3) présente des faces latérales plates (4).

3. Pâtisserie à longue durée de conservation selon la revendication 1 ou 2, **caractérisée en ce que** les faces latérales (4) sont inclinées par rapport à la perpendiculaire à la surface horizontale.

4. Pâtisserie à longue durée de conservation selon la revendication 3, **caractérisée en ce que** l'inclinaison est de 4 degrés.

5. Pâtisserie à longue durée de conservation selon l'une des revendications 1 à 4, **caractérisée en ce que**, pour le procédé d'assemblage, des additifs (5, 6) sont utilisés.

6. Pâtisserie à longue durée de conservation selon la revendication 5, **caractérisé en ce que** les additifs (5, 6) sont constitués du même ingrédient que la garniture (3).

7. Pâtisserie à longue durée de conservation selon la revendication 5 ou 6, **caractérisée en ce que** les additifs sont disposés dans au moins un évidement (7, 8) du côté supérieur et du côté inférieur de la garniture (3).

8. Pâtisserie à longue durée de conservation selon la revendication 7, **caractérisée en ce que** l'évidement (7, 8) est aménagé sur un bord (11, 12) de la garniture (3).

9. Pâtisserie à longue durée de conservation selon l'une des revendications 1 à 4, **caractérisée en ce que**, pour le procédé d'assemblage, aucun additif n'est utilisé.

10. Pâtisserie à longue durée de conservation selon la revendication 9, **caractérisée en ce que**, pour le procédé d'assemblage, des parties de la garniture en forme de plaque (3) sont elles-mêmes utilisées.

11. Pâtisserie à longue durée de conservation selon la revendication 10, **caractérisée en ce que** les parties sont constituées d'un bord et/ou des parties surélevées de la garniture en forme de plaque (3).

12. Pâtisserie à longue durée de conservation selon l'une des revendications 1 à 11, **caractérisée en ce que** les faces latérales (4) de la garniture en forme de plaque (3) sont sensiblement alignées avec les faces latérales (9, 10) et/ou parties latérales des pièces de pâtisserie (1, 2).

13. Pâtisserie à longue durée de conservation selon l'une des revendications 1 à 11, **caractérisée en ce que** la face latérale (4) de la garniture en forme de plaque (3) sont en retrait par rapport aux faces latérales (9, 10) et/ou aux parties latérales des pièces de pâtisserie (1, 2).

14. Pâtisserie à longue durée de conservation selon l'une des revendications 1 à 13, **caractérisée en ce que** le rapport de poids entre la garniture (3) et les pièces de pâtisserie (1, 2) est sensiblement le même.
